# EUROPEAN PATENT APPLICATION

(11) **EP 4 668 003 A1**
(43) Date of publication of application: **24.12.2025**
(21) Application number: 25183231.7
(22) Date of filing: 17.06.2025
(51) Int. Cl.: G02C 11/00, G02C 5/14

(54) **TEMPLE CLIP**

(30) Priority: 18.06.2024 JP 2024098162
(71) Applicant: JINS HOLDINGS Inc., Gunma 371-0046 (JP)
(72) Inventor: NAKAMURA, Susumu, Gunma, 3710046 (JP); KOMODA, Taiki, Gunma, 3710046 (JP); IWAHARA, Ippei, Tokyo, 1510051 (JP); SHIMADA, Hideaki, Osaka, 5870002 (JP)
(74) Representative: Mewburn Ellis LLP

(57) **Abstract**

There is provided a temple clip as an attachment capable of mounting an external device or the like to temples having a plurality of types of cross-sectional shapes. The temple clip includes a block body having a slit through which a temple of eyewear is inserted to hold the temple, wherein a cross-sectional shape of the slit includes a shape obtained by combining shapes matching cross-sectional shapes of at least two types of temples. The temple clip may include a U-shaped leaf spring that is placed over the block body and biases in a direction of reducing a width of the slit.

## Description

### BACKGROUND OF THE INVENTION

### Field of the Invention

The present invention relates to a temple clip.

### Description of the Related Art

Attempts have been made to provide eyewear typified by glasses with various functions. For example, eyewear having a camera unit integrally provided at a temple or the like has been commercially available. There is an increasing demand to mount devices or the like for different purposes to eyewear daily used by a user, rather than wearing special eyewear for a specific function as described above. For example, according to Patent Literature 1, in order that a bone conduction speaker can be mounted to a temple of typical eyewear, different attaching parts for different temples are prepared.

### [Citation List]

### [Patent Literature]

[Patent Literature 1] Japanese Patent Laid-Open No. 2004-320605

### SUMMARY OF THE INVENTION

In a case where an external device or the like is mounted to a temple portion, attachments having a plurality of types of attaching parts as described above need to be prepared to accommodate temples having different cross-sectional shapes of different types of eyewear. However, preparing many attachments forces a user to select a specific attachment among them at the beginning of use, or causes an increase in cost due to packaging of attachments that are not used.

The present invention has been made to solve such problems, and provides a temple clip as an attachment capable of mounting an external device or the like to temples having a plurality of types of cross-sectional shapes.

A temple clip according to one aspect of the present invention includes a block body having a slit through which a temple of eyewear is inserted to hold the temple, wherein a cross-sectional shape of the slit includes a shape obtained by combining shapes matching cross-sectional shapes of at least two types of temples.

The present invention can provide a temple clip as an attachment capable of mounting an external device or the like to temples having a plurality of types of cross-sectional shapes.

### BRIEF DESCRIPTION OF THE DRAWINGS

FIG. 1 is a perspective view of usage of a temple clip according to the present embodiment;
FIG. 2 is an exploded perspective view of a configuration of the temple clip;
FIG. 3 is a sectional view of a block body;
FIG. 4 illustrates a cross-sectional shape of a slit;
FIG. 5 shows a second side surface of the temple clip;
FIG. 6 shows a first side surface of the temple clip;
FIG. 7 is a sectional view of a block body according to another embodiment;
FIG. 8 is an exploded perspective view of a configuration of a temple clip according to another embodiment; and
FIG. 9 is a perspective view of a temple clip according to another embodiment.

### DETAILED DESCRIPTION OF THE INVENTION

Now, the present invention will be described by way of embodiments, but the invention according to claims is not limited to the embodiments described below. All components described in the embodiments are not necessarily essential as solution means. In the drawings, the same reference numerals denote the same or similar components. The same or similar components already described are not denoted by the reference numerals in some cases even in different embodiments to avoid complication.

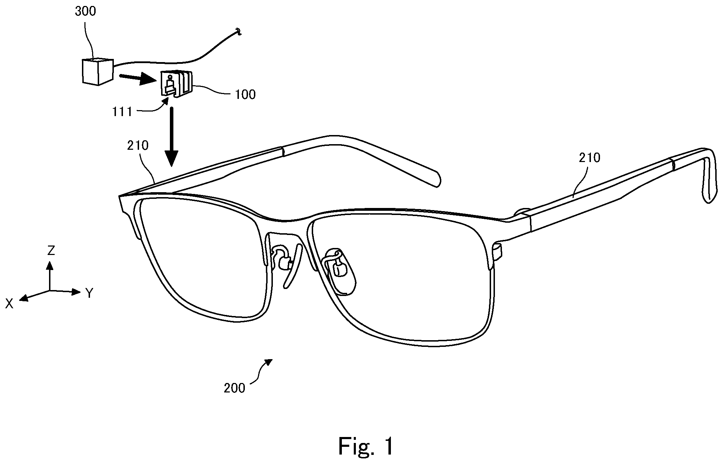

FIG. 1 is a perspective view of usage of a temple clip 100 according to the present embodiment. The temple clip 100 is an attachment to be mounted to a temple 210 of eyewear 200 for use. As described later in detail, an external device 300 can be mounted to one side surface of the temple clip 100, and a user can utilize a function of the external device 300 via the temple clip 100 while wearing the eyewear 200.

The temple clip 100 includes a slit 111 having an opening in a bottom surface and extending from a front surface to a rear surface. As shown, the user can insert the temple 210 through the slit 111 to hold the temple 210 on a top side of the eyewear 200, thereby mounting the temple clip 100 to the temple 210.

In FIG. 1, the temple clip 100 is shown mounted to the temple 210 for right ear, but the temple clip 100 may be mounted to the temple 210 for left ear. The user may mount the temple clip 100 to the temple 210 and then mount the external device 300 to the temple clip 100, or may mount the external device 300 to the temple clip 100 and then mount the temple clip 100 to the temple 210.

The external device 300 is assumed to be a device having a size similar to that of the temple clip 100, and may be, for example, a gyro sensor that detects motion of head of the user or an imaging unit that images a scene in an eye direction of the user. Although FIG. 1 shows the external device 300 being connected to a control device by wire for power supply or signal exchanges, the external device 300 may be an independent device that is driven by a rechargeable battery and exchanges signals with the control device by wireless communication. In the present embodiment, the temple clip 100 and the external device 300 are separately formed and detachable, but the temple clip 100 may be formed integrally with the external device 300.

In the present embodiment, as shown by coordinate axes in FIG. 1, an extending direction of the temple 210 is defined as an X-axis direction, a cutting direction of the slit 111 orthogonal to the X-axis direction is defined as a Z-axis direction, and a direction orthogonal to the X-axis direction and the Z-axis direction is defined as a Y-axis direction. Also in subsequent drawings, the same coordinate axes based on an arrangement of the temple clip 100 as shown in FIG. 1 are shown to indicate directions of structures shown in the drawings. In particular, a positive X-axis direction may be referred to as "front", a negative X-axis direction may be referred to as "rear", a positive Z-axis direction may be referred to as "top", and a negative Z-axis direction may be referred to as "lower" or "bottom". Also, a side of a region between the two opened temples 210 in the Y-axis direction may be referred to as "inner", and sides of the other regions may be referred to as "outer".

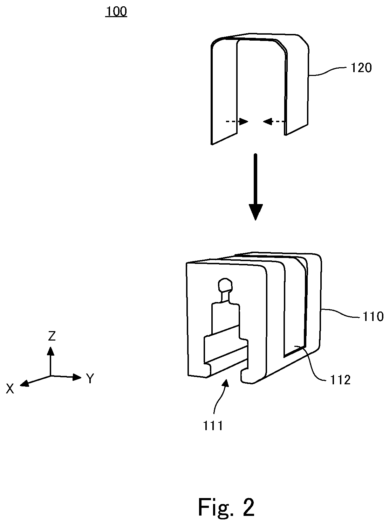

FIG. 2 is an exploded perspective view of a configuration of the temple clip 100. The temple clip 100 includes a block body 110 made of an elastic body, and a U-shaped leaf spring 120 made of a magnetic body.

As described above, the block body 110 includes the slit 111 having the opening in the bottom surface and extending from the front surface to the rear surface. A cross-sectional shape of the slit 111 will be described later in detail. A receiving groove 112 is formed in a top surface and opposite side surfaces of the block body 110, and the receiving groove 112 has a shape corresponding to a shape of the leaf spring 120 to receive the leaf spring 120. The block body 110 is made of an elastomer so that the slit 111 holds the temple 210 when the temple 210 is inserted through the slit 111. Specific examples of the elastomer include silicone, rubber, or rubber-like resin.

The leaf spring 120 reinforces a force of the slit 111 holding the temple 210. When placed over the block body 110, the leaf spring 120 biases in a direction of reducing a width of the slit 111 (a distance between facing surfaces of the slit 111 in the Y-axis direction). When the leaf spring 120 is assembled to the block body 110, the leaf spring 120 is placed over the receiving groove 112 in the block body 110 with two facing surfaces of the leaf spring 120 being slightly spread.

The leaf spring 120 also functions as a mounting portion to which the external device 300 is mounted. Specifically, the leaf spring 120 is made of a magnetic body and thus can attract a magnet, and the external device 300 in which the magnet is embedded can be stably secured to the temple clip 100.

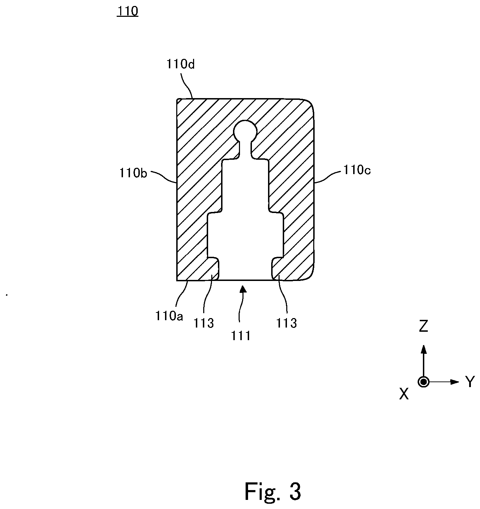

FIG. 3 is a sectional view of the block body 110. As shown, the slit 111 has the opening in a bottom surface 110a, and the opening has projections 113 that reduce the width of the slit. Providing such projections 113 can reinforce a holding force for a certain type of temple 210.

Of two opposite side surfaces of the block body 110 that are parallel to each other in the extending direction (X-axis direction) of the slit 111, an outer side surface (first side surface) 110b facing the external device 300 is orthogonal to and adjacent to the bottom surface 110a, while an inner side surface (second side surface) 110c facing the user's face is connected to the bottom surface 110a by a rounded surface (curved surface). Similarly, the outer side surface 110b is orthogonal to and adjacent to a top surface 110d, and the inner side surface 110c is connected to the top surface 110d by a rounded surface (curved surface). Details will be described later.

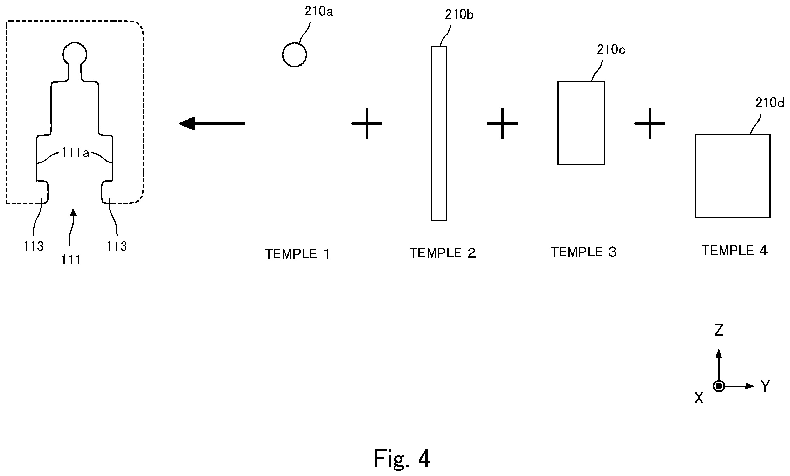

Now, the cross-sectional shape of the slit 111 will be described. FIG. 4 illustrates the cross-sectional shape of the slit 111. For the temple clip 100 according to the present embodiment, the cross-sectional shape of the slit 111 is determined to accommodate at least four types of temples. Specifically, the cross-sectional shape of the slit 111 is determined to include a shape obtained by combining shapes matching cross-sectional shapes of the four types of temples.

The cross-sectional shape of the slit 111 shown by a solid line on the left in FIG. 4 includes, for example, a shape obtained by combining a circle 111a matching a cross-sectional shape of a first temple 210a assuming a narrow edge frame made of metal, an elongated rectangle 111b matching a cross-sectional shape of a second temple 210b assuming a sheet metal type frame, a slightly wide rectangle 111c matching a cross-sectional shape of a third temple 210c assuming a resin frame, and a wider rectangle 111d matching a cross-sectional shape of a fourth temple 210d assuming a thick edge frame made of resin. In FIG. 4, the circle 111a shown by a dotted line (partially overlapping the cross-sectional shape of the slit 111) is a circle matching the cross-sectional shape of the temple 210a, and represents an assumed position when the temple 210a is held by the slit 111. Similarly, the rectangle 111b shown by a dotted line is a rectangle matching the cross-sectional shape of the temple 210b, and represents an assumed position when the temple 210b is held by the slit 111. The rectangle 111c shown by a dotted line is a rectangle matching the cross-sectional shape of the temple 210c, and represents an assumed position when the temple 210c is held by the slit 111. The rectangle 111d shown by a dotted line is a rectangle matching the cross-sectional shape of the temple 210d, and represents an assumed position when the temple 210d is held by the slit 111. Specifically, the cross-sectional shape of the slit 111 thus includes an outline of a figure obtained by combining the circle and the rectangles matching the cross-sectional shapes of the temples. Here, matching of the shapes does not require that the cross-sectional shape of the slit 111 be identical to the cross-sectional shapes of the temples, but only requires that when an elastic material surrounds each temple, the elastic material comes into contact with the temple to generate an appropriate pressing force. Therefore, corners of the rectangle may be chamfered, or the circle may be replaced by a polygon (for example, a hexagon).

When the temple 210b is held by the slit 111, for example, the temple 210b protrudes from the bottom surface of the block body 110, and thus the cross-sectional shape of the slit 111 does not need to surround the bottom surface of the cross-sectional shape of each temple. Also, the circle having a relatively small diameter for the temple 210a is preferably arranged at the deepest part of the slit 111 as shown so that the temple 210a comes into contact with the slit 111 in a larger area. Typical eyewear often includes temples having a circular cross-sectional shape or a rectangular cross-sectional shape, and thus the cross-sectional shape of the slit 111 preferably includes a shape obtained by combining at least a rectangle and a circle.

An intended contact surface 111e among the surfaces of the slit 111, which is to come into contact with at least any of the temples, is preferably subjected to anti-slip treatment. The anti-slip treatment is, for example, providing fine irregularities or attaching an anti-slip film having a large friction resistance. Also, when the fourth temple 210d having the wide rectangular cross section is inserted through the slit 111, the projections 113 described above can press surfaces of the temple 210d, thereby improving stability of a mounting state.

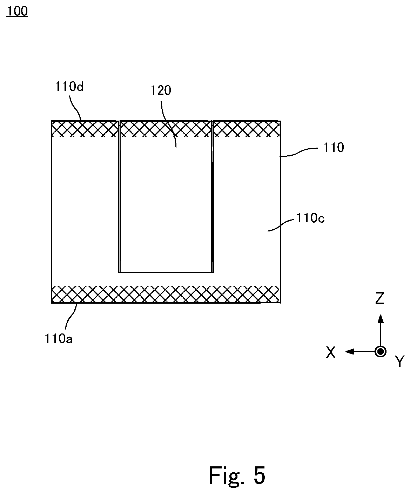

FIG. 5 shows the second side surface that is the inner side surface of the temple clip 100. As described above, the inner side surface 110c is connected to the bottom surface 110a and the top surface 110d by rounded surfaces (hatched parts in FIG. 5).

Generally, when the user wears the eyewear 200, a distance between the temple 210 and the face is relatively small, and when the temple clip 100 is mounted to the temple 210, the distance between the inner side surface 110c of the temple clip 100 and the face is further reduced. Thus, providing such rounded surfaces can ease discomfort of the user even if the temple clip 100 comes into contact with the face for some reason. In particular, considering that the temple clip 100 comes closer to the face at the bottom surface, at least the inner side surface 110c and the bottom surface 110a are preferably connected by the rounded surface.

In the present embodiment, an end of the leaf spring 120 extends to a position along the rounded surface connected to the inner side surface 110c. With the end of the leaf spring 120 along the rounded surface, it is expected that the leaf spring 120 is less likely to be separated from the block body 110. For example, if ease of assembling of the leaf spring 120 to the block body 110 is a priority, the end of the leaf spring 120 may have a flat shape along the inner side surface 110c.

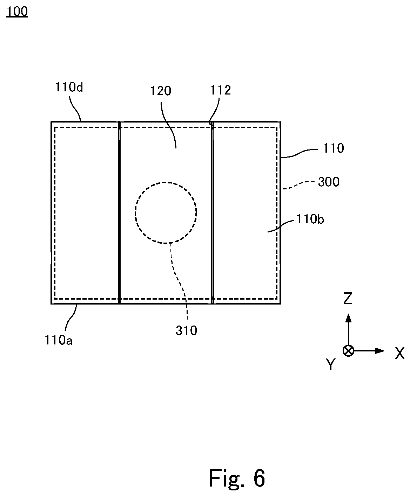

FIG. 6 shows the first side surface that is the outer side surface of the temple clip 100. In particular, part of the external device 300 is shown by a dotted line in an overlapping manner to clarify a positional relationship between the temple clip 100 and the external device 300.

As described above, the leaf spring 120 is received by the receiving groove 112 to hold the block body 110. As shown, a width (length in the X-axis direction) of the leaf spring 120 is smaller than a length of the block body 110 in the X-axis direction, that is, a length of the block body in the extending direction of the slit 111. A depth of the receiving groove 112 is set such that a surface of the leaf spring 120 received by the receiving groove 112 is flush with the outer side surface 110b adjacent thereto. As shown, a magnet 310 is embedded in a contact surface of the external device 300 that comes into contact with the temple clip 100, and the magnet 310 attracts the leaf spring 120 to secure the external device 300 to the temple clip 100.

In this case, the surface of the leaf spring 120 is flush with the outer side surface 110b, and thus the contact surface of the external device 300 comes into contact with both the surface of the leaf spring 120 and the outer side surface 110b. Since a frictional coefficient of the surface of the block body 110 made of an elastomer is higher than that of the surface of the leaf spring 120 made of the magnetic body, the outer side surface 110b that comes into contact with the contact surface of the external device 300 functions as an anti-slip surface. Specifically, the external device 300 once secured to the temple clip 100 is less likely to be displaced during use. In particular, in the present embodiment, the receiving groove 112 is provided at a middle of the block body 110 in the X-axis direction, and a frictional force on a front side and a frictional force on a rear side are generated substantially equally.
Thus, it can be expected that the external device 300 is also prevented from rotating around the magnet 310 with respect to the temple clip 100.

As described above, the outer side surface 110b is orthogonal to and adjacent to each of the bottom surface 110a and the top surface 110d. Increasing a surface area of the outer side surface 110b in this manner can increase an area for contact with the contact surface of the external device 300, thereby allowing the external device 300 to be more stably secured to the temple clip 100. The end of the leaf spring 120 preferably extends to a boundary of the bottom surface 110a. The end of the leaf spring 120 extending in this manner can further reinforce the holding force of the slit 111.

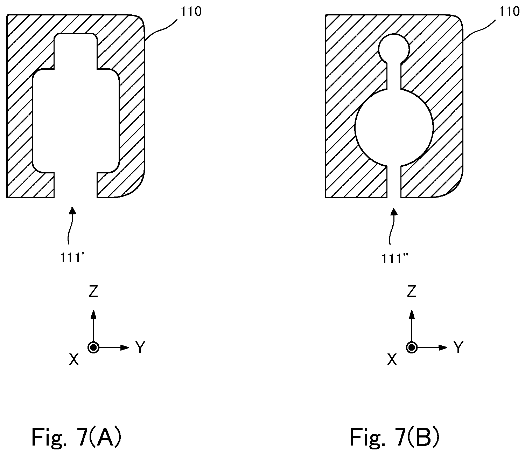

Next, some variants of the temple clip 100 will be described. FIG. 7 is a sectional view of the block body 110 according to another embodiment as a variant of the temple clip 100. The block body 110 in FIG. 7(A) include a slit 111' having a cross-sectional shape assuming two temples that have rectangular cross-sectional shapes and have different widths. The block body 110 in FIG. 7(B) includes a slit 111" having a cross-sectional shape assuming three temples: two temples having circular cross-sectional shapes with different diameters and a temple having an elongated rectangular cross-sectional shape. As such, for example, the cross-sectional shape of the slit can be variously set to accommodate a cross-sectional shape of a temple of eyewear with a large market share or accommodate a cross-sectional shape of a temple of eyewear preferred for mounting of a specific external device.

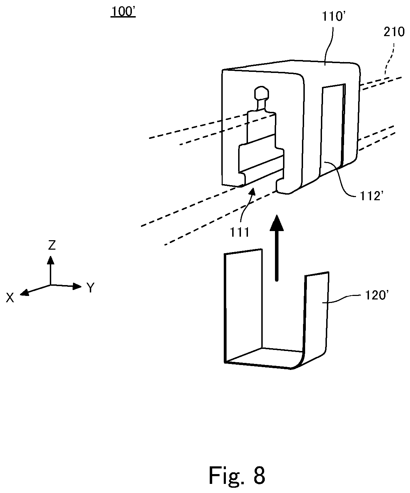

FIG. 8 is an exploded perspective view of a configuration of a temple clip 100' according to a further embodiment. In the temple clip 100 described above, the U-shaped leaf spring 120 is placed over the block body 110 from the top side. For the temple clip 100 thus configured, the user does not need to place the leaf spring 120 over the block body 110, which is convenient. On the other hand, for the temple clip 100', a U-shaped leaf spring 120' is placed over a block body 110' from a bottom side.

Specifically, the block body 110' has a receiving groove 112' in a bottom surface and opposite side surfaces. The user inserts the temple 210 through the slit 111 on the top side of the eyewear 200, and then places the leaf spring 120' over the block body 110' to cover a lower surface of the temple 210. Such a configuration can prevent the temple clip 100' from being separated from the temple 210. Assuming the temple 210 protruding downward from the opening of the slit 111, the leaf spring 120' may be used having a shape that circumvents such a protrusion.

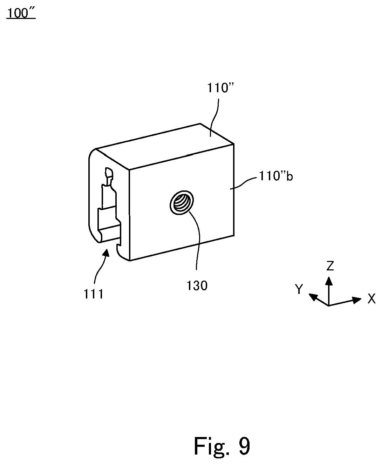

FIG. 9 is a perspective view of a temple clip 100" according to a further embodiment. In the temple clip 100 described above, the leaf spring 120 functions as the mounting portion that attracts the magnet 310 to secure the external device 300. The mounting portion may not be a magnetic body that attracts the magnet, but various mounting mechanisms may be used. If the block body itself has a large biasing force in a direction of narrowing the slit 111, the block body alone can constitute the temple clip without the leaf spring 120. FIG. 9 shows a variant in which a block body 110" alone constitutes the temple clip 100".

The temple clip 100" includes a mounting female thread 130 as a mounting portion in an outer side surface 110"b. The mounting female thread 130 may be formed by embedding a metal female thread in the block body 110". In this case, the external device 300 includes a male thread as a mounting portion, and the male thread is threaded into the mounting female thread 130 to secure the external device 300 to the temple clip 100".

### [Reference Signs List]

100, 100', 100" temple clip
110, 110', 110" block body
110a bottom surface
110b outer side surface
110c inner side surface
110d top surface
111, 111', 111" slit
111a circle
111b rectangle
111c rectangle
111d rectangle
111e intended contact surface
112, 112' receiving groove
113 projection
120, 120' leaf spring
130 mounting female thread
200 eyewear
210, 210a, 210b, 210c, 210d temple
300 external device
310 magnet

## Claims

1. A temple clip comprising a block body having a slit through which a temple of eyewear is inserted to hold the temple,
wherein a cross-sectional shape of the slit includes a shape obtained by combining shapes matching cross-sectional shapes of at least two types of temples.

2. The temple clip according to claim 1, wherein the block body is made of an elastomer.

3. The temple clip according to claim 1, wherein the cross-sectional shape of the slit includes a shape of a combination of a rectangle and a circle.

4. The temple clip according to claim 1 or 2, wherein the cross-sectional shape of the slit includes two rectangles with different widths.

5. The temple clip according to claim 2, wherein the cross-sectional shape of the slit includes a circle at a deepest part of the slit.

6. The temple clip according to claim 1, wherein the cross-sectional shape of the slit includes a projection that reduces a width of the slit at an opening of the slit.

7. The temple clip according to claim 1, wherein an intended contact surface of the slit, which is to come into contact with at least the temple, is subjected to anti-slip treatment.

8. The temple clip according to claim 1, wherein the opening of the slit is provided in a bottom surface of the block body so that the temple is inserted through the slit on a top side of the eyewear.

9. The temple clip according to claim 1, wherein the block body includes a mounting portion to which an external device is mounted.

10. The temple clip according to claim 9, wherein a first side surface having the mounting portion, of two opposite side surfaces of the block body that are parallel to each other in an extending direction of the slit, is orthogonal to and adjacent to the bottom surface having the opening of the slit, while a second side surface of the two side surfaces is connected to the bottom surface by a rounded surface.

11. The temple clip according to claim 1, comprising a U-shaped leaf spring that is placed over the block body and biases in a direction of reducing a width of the slit.

12. The temple clip according to claim 11, wherein the leaf spring is made of a magnetic body, and functions as a mounting portion to which the external device is mounted.

13. The temple clip according to claim 11, wherein a width of the leaf spring is smaller than a length of the block body in the extending direction of the slit, and
the block body has a recess that receives the leaf spring such that a surface of the leaf spring placed over the block body is flush with an adjacent surface on a first side surface of two opposite side surfaces that are parallel to each other in the extending direction.

14. The temple clip according to claim 13, wherein the recess is provided at a middle of the first side surface in the extending direction.

15. The temple clip according to claim 11, wherein a first side surface of two opposite side surfaces of the block body that are parallel to each other in the extending direction of the slit is orthogonal to and adjacent to the bottom surface having the opening of the slit, while a second side surface of the two side surfaces is connected to the bottom surface by a rounded surface.

16. The temple clip according to claim 15, wherein the leaf spring extends to a boundary between the first side surface and the bottom surface on a side of the first side surface, and extends onto the rounded surface on a side of the second side surface.
